(19) Europäisches Patentamt European Patent Office Office européen des brevets

(11) **EP 4 742 524 A1**

(12) **EUROPEAN PATENT APPLICATION**
published in accordance with Art. 153(4) EPC

(43) Date of publication:
**13.05.2026  Bulletin 2026/20**

(21) Application number: **23754813.6**

(22) Date of filing: **04.07.2023**

(51) International Patent Classification (IPC):
$H02M\ 3/335^{(2006.01)}$   $H02M\ 7/483^{(2007.01)}$
$H02M\ 1/00^{(2006.01)}$   $B60L\ 53/20^{(2019.01)}$

(52) Cooperative Patent Classification (CPC):
**H02M 3/33569; B60L 53/22; H02M 1/007;**
**H02M 1/0077; H02M 1/008; H02M 3/33573;**
**H02M 7/483;** B60L 2210/10; B60L 2210/30;
B60L 2210/40

(86) International application number:
**PCT/ES2023/070428**

(87) International publication number:
**WO 2025/008550 (09.01.2025 Gazette 2025/02)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Ingeteam Power Technology, S.A.**
**48170 Zamudio (Bizkaia) (ES)**

(72) Inventors:
• **LAREQUI GARAYOA, Iñaki**
**31621 Sarriguren (Navarra) (ES)**

• **ZABALETA MAEZTU, Mikel**
**31621 Sarriguren (Navarra) (ES)**
• **ELIZONDO MARTÍNEZ, David**
**31006 Pamplona (Navarra) (ES)**
• **BARRIOS RÍPODAS, Ernesto L.**
**31006 Pamplona (Navarra) (ES)**
• **SANCHÍS GÚRPIDE, Pablo**
**31006 Pamplona (Navarra) (ES)**
• **URSÚA RUBIO, Alfredo**
**31006 Pamplona (Navarra) (ES)**

(74) Representative: **Balder IP Law, S.L.**
**Paseo de la Castellana 93**
**5ª planta**
**28046 Madrid (ES)**

(54) **BALANCED VOLTAGE GENERATION SYSTEM AND POWER CONVERSION SYSTEM INCLUDING SAID BALANCED VOLTAGE GENERATION SYSTEM**

(57)    The invention provides a voltage generation system (100), comprising: an input bus (10) providing a direct current input voltage ($E_{inv}$); an inverter (20) configured to deliver a square voltage ($v_{inv}$) at its output ($T_{r+}$, $T_{r-}$); N resonant power blocks ($25_1$, ..., $25_n$, ..., $25_N$), where N>1, each connected to its respective input in parallel with the output of the inverter (20), wherein each resonant power block ($25_1$, ..., $25_n$, ..., $25_N$) comprises a series resonant capacitor ($C_{r1}$, $C_{r2}$, ...), a single-phase transformer ($40_1$, ..., $40_n$, ..., $40_N$), a rectifier ($50_1$, ..., $50_n$, ..., $50_N$), an output capacitor ($C_{1s,1}$ ..., $C_{s,n}$, ..., $C_{s,N}$) and a direct current bus ($60_1$, ..., $60_n$, ..., $60_N$) connected to the output ($T_{1+}$, $T_{1-}$; ..., $T_{n+}$, $T_{n-}$;..., $T_{N+}$, $T_{N-}$) of a respective rectifier ($50_1$, ..., $50_n$, ..., $50_N$), with each resonant power block ($25_1$, ..., $25_n$, ..., $25_N$) being con- figured to operate in discontinuous conduction mode with a constant voltage gain independent of the operating power; wherein the inverter (20) is configured to switch to a frequency less than or equal to the resonance frequency of the resonant power blocks ($25_1$, ..., $25_n$, ..., $25_N$) and to operate in discontinuous conduction mode (DCM), with each resonant power block ($25_1$, ..., $25_n$, ..., $25_N$) being configured to deliver a rectified voltage ($E_{rect,1}$, $E_{rect,2}$, $E_{rect,3}$) to each respective direct current bus ($60_1$, ..., $60_n$, ..., $60_N$), with each rectified voltage ($E_{rect,1}$, ..., $E_{rect,n}$, ..., $E_{rect,N}$) being constant and proportional to the direct current voltage ($E_{inv}$) of the input bus (10); the voltage generation system (100) offering a rectified voltage level ($E_{rect,1}$, ..., $E_{rect,n}$, ..., $E_{rect,N}$) for each resonant power block ($25_1$, ..., $25_n$, ..., $25_N$).

**(Cont. next page)**

FIG. 1B

## Description

## FIELD OF THE INVENTION

The present invention belongs to the field of power electronics and, more specifically, to multilevel converters that provide several voltage levels.

## PRIOR STATE OF THE ART

Multilevel converters are widely used in all types of industrial applications, such as in power generation systems that use renewable sources (for example, photovoltaic and wind sources), in solid-state transformers (SST) for high voltage direct current (HVDC) grids, in static synchronous compensators (STATCOM), in electric vehicle chargers, in railway and marine traction, and in medium and high-power drive systems (L. G. Franquelo, J. Rodriguez, J. I. Leon, S. Kouro, R. Portillo and M. A. M. Prats, "The age of multilevel converters arrives", in IEEE Industrial Electronics Magazine, vol. 2, no. 2, pp. 28-39, June 2008, doi: 10.1109/MIE.2008.923519; S. Kouro et al., "Recent Advances and Industrial Applications of Multilevel Converters", in IEEE Transactions on Industrial Electronics, vol. 57, no. 8, pp. 2553-2580, Aug. 2010, doi: 10.1109/TIE.2010.2049719). Topologies of this type are especially used in DC/AC applications and also often in DC/DC applications.

Multilevel converters must have different levels of direct current input voltage. To do this, multilevel converters start from a current bus divided into N voltage levels that can be equal or have different values (asymmetrical). From this bus, multiple voltage levels are obtained per branch at the output, typically N+1 levels, achieving better quality in the output waveform and allowing a lower filtering requirement in the converter (if compared to two-level converters). Furthermore, they allow the cut-off voltage of the semiconductors to be reduced for one same application voltage, reducing both the switching losses and the conduction losses, thus obtaining greater efficiency. They also allow better thermal management of the converter, which is a very relevant factor in high power converters.

The N voltage levels at the input of the converter can be obtained in several ways. One of them is through several direct current sources. Another way is through capacitive dividers (capacitors connected in series) that should ideally behave as voltage sources. However, capacitors are charged/discharged based on the current or power that they deliver/absorb, where the voltage at their terminals can vary. The greatest drawback of these multilevel topologies is that it must be ensured that the voltage is suitably distributed among the different bus capacitors at all times, meaning that the correct balancing of the capacitor voltages must be ensured so that each capacity acts as a constant voltage source (direct current level). This task is often carried out by the control system of the converter.

The balancing of capacitor voltages has been and continues to be a subject of great interest both in the industrial field and in academic research. A complete review of the different methods for balancing these voltages can be found in S. Alepuz et al., "A Survey on Capacitor Voltage Control in Neutral-Point-Clamped Multilevel Converters", Electronics, vol. 11, no. 4, p. 527, Feb. 2022, doi: 10.3390/electronics11040527. The methods for balancing capacitor voltages can be grouped according to their operating principle:

1. Hardware balancing: it consists of including additional components to balance the voltages. In turn, the different solutions can be classified into:

a) Active hardware: voltage balancing circuits connected to the voltage point to be balanced are included and the capacitor voltages are actively balanced by means of control loops. These circuits can be dedicated DC/DC converters for each of the capacitors (as described, for example, in K. A. Corzine, J. Yuen and J. R. Baker, "Analysis of a four-level DC/DC buck converter", in IEEE Transactions on Industrial Electronics, vol. 49, no. 4, pp. 746-751, Aug. 2002, doi: 10.1109/TIE.2002.801075) or additional multilevel branches connected to the point which voltage is to be balanced, forming "four-legged or branched" inverters (as described, for example, in Ning-Yi Dai, Man-Chung Wong and Ying-Duo Han, "Application of a three-level NPC inverter as a three-phase four-wire power quality compensator by generalized 3DSVM", in IEEE Transactions on Power Electronics, vol. 21, no. 2, pp. 440-449, March 2006, doi: 10.1109/TPEL.2005.869755).

b) Passive hardware with natural balancing: it consists of introducing a series RLC circuit in the output of the multilevel converter called a "balancing circuit" (see, for example, H. du Toit Mouton, "Natural balancing of three-level neutral-point-clamped PWM inverters", in IEEE Transactions on Industrial Electronics, vol. 49, no. 5, pp. 1017-1025, Oct. 2002, doi: 10.1109/TIE.2002.803205). This circuit responds to the frequencies at which voltage components appear at the output when there is a voltage imbalance. In this way, it dissipates power at those frequencies, making it possible to balance the voltages. It does not require measures or control loops, which is why it is classified as a passive hardware method since it only uses passive elements.

c) Passive hardware with a low-frequency transformer from the AC grid: a grid frequency transformer with N secondaries is used (where N is the number of voltage levels at the DC input of the multilevel converter) (see, for example, C. Newton and M. Sumner, "A novel arrangement for balancing the capacitor voltages of a five level diode clamped inverter", 1998 Seventh International Conference on Power Electronics and Variable Speed Drives (IEE Conf. Publ. No. 456), 1998, pp. 465-470, doi: 10.1049/cp:19980571). Phase-shifted secondary windings are used to avoid absorbing low-frequency harmonics from the grid. The secondaries are rectified by three-phase diode bridges and a fixed voltage (independent DC source) imposed by the grid voltage and the transformation ratio between the primary and the different secondaries is obtained. The voltage sources will be somewhat different due to the differences between the parasitic impedances of the different secondaries of the transformer, in addition to the tolerances in their manufacture. This is classified as passive hardware because it does not require active control loops.

2. Control balancing: it consists of including a closed control loop that is responsible for balancing the voltages using only the hardware components of the multilevel converter itself. There is a vast number of techniques to carry out this control, such as the one described in S. Busquets-Monge, J. D. Ortega, J. Bordonau, J. A. Beristain and J. Rocabert, "Closed-Loop Control of a Three-Phase Neutral-Point-Clamped Inverter Using an Optimized Virtual-Vector-Based Pulsewidth Modulation", in IEEE Transactions on Industrial Electronics, vol. 55, no. 5, pp. 2061-2071, May 2008, doi: 10.1109/TIE.2008.918646.

3. Self-balancing: in some particular cases, in certain multilevel converters, self-balancing of the voltages can be produced by the parasitic effects that dissipate power and are present in the converter: either by the parasitic resistances of the different components that form the circuit in flying capacitor multilevel converters (see, for example, B. P. McGrath and D. G. Holmes, "Analytical Modelling of Voltage Balance Dynamics for a Flying Capacitor Multilevel Converter", in IEEE Transactions on Power Electronics, vol. 23, no. 2, pp. 543-550, March 2008, doi: 10.1109/TPEL.2007.915175) or by ZVS switching in DC/DC multilevel converters (see, for example, Z. Yao and S. Lu, "Voltage Self-Balance Mechanism Based on Zero-Voltage Switching for Three-Level DC-DC Converter", in IEEE Transactions on Power Electronics, vol. 35, no. 10, pp. 10078-10087, Oct. 2020, doi: 10.1109/TPEL.2020.2977881).

Each of the foregoing techniques has its advantages and drawbacks. Although none of them has clearly prevailed over the rest, there is a greater tendency to use techniques of hardware balancing and control balancing.

The self-balancing techniques are used much less, since they can only be used in very specific applications and cannot be generalised. To this day, work continues on multiple fronts, both in the industrial field and in the academic setting, to continue improving the different balancing techniques and to provide more competitive solutions to the main problem of multilevel converters.

Regarding the most used techniques (hardware and control techniques), hardware balancing techniques require a greater number of components, with control loops (active hardware techniques) or with highly tuned parasites to achieve good balancing (passive hardware techniques with natural balancing or passive hardware techniques with low-frequency transformer from the AC grid). This entails increased costs, less reliability and, in some cases, the inability to achieve perfect balancing of the voltages of the different capacitors. On the other hand, control techniques (control balancing) are highly complex, require the evaluation of the most extreme or negative operating cases from the point of view of stability, and require extra elements for sensing different variables. Consequently, they exhibit lower robustness and also face an extra cost due to sensing and in some cases also due to the implementation of control loops in dedicated devices. Furthermore, these techniques have limited application ranges in terms of their modulation index and power factor delivered at the output if there is an AC output. Or, on the contrary, they require a high number of switching to be able to avoid these limitations, whereby the switching losses of the converter increase, reducing its efficiency and worsening one of the main advantages of multilevel converters.

Therefore, there is a need to develop new techniques for balancing voltages at the input of the converter, which overcome the drawbacks of the currently known and used techniques.

## DESCRIPTION OF THE INVENTION

The present invention provides a system that aims to solve the drawbacks of the techniques described in the state of the art. The present invention provides a voltage generation system that inherently ensures the balancing of the voltages at its output without the need for any type of control.

To do this, it starts from a single common direct current (DC) bus. By means of a direct current-alternating current converter (DC/AC or inverter), a square voltage is obtained with a constant branch duty cycle, for example, of approximately 50%. This voltage is applied to an N number of series resonant blocks, which inputs (of the N blocks) are connected in parallel. At the output of each of the series resonant blocks, rectification takes place by means of an alternating current-direct current converter (AC/DC). Each of the N series resonant blocks consists of a series resonant capacitor, a single-phase transformer, an AC/DC converter or rectifier, and a capacitor at the output, giving rise to N direct current voltage outputs. The system that includes the inverter and the N resonant blocks is a voltage generator, which obtains N DC voltage levels from a single DC voltage. These N voltage levels can be used as input buses of a multilevel regulating converter (which is also called a "multilevel regulator" herein). The multilevel regulator can be DC/AC (the power flow circulates from its DC input to its AC output) or DC/DC, and has the ability to control the voltage and current at its output and, therefore, the power flow of the system.

In the proposed system, the operation of the input inverter (also called DC/AC converter) is directly related to the operation of the resonant blocks. The inverter or DC/AC converter is operated with a constant branch duty cycle, normally but not limited to 50%, in an open loop and without any type of feedback or control. The inverter is preferably operated with a switching frequency equal to or less than the resonance frequency of the series resonant block and must operate in discontinuous conduction mode (DCM), where there is only one half cycle of the current of polarity equal to the applied voltage. The resonance of the series resonant block takes place between the series resonant capacitor and the series resonant inductance, which is preferably the leakage inductance of the transformer.

Thus, a constant voltage gain is achieved, equal to the transformer gain, between each of the output voltages of the voltage generation system and the common input DC voltage. This gain does not depend on the power at which the system operates. The voltage of each bus capacitor at the output of the voltage generation system is an intermediate voltage level that will not be modified or unbalanced with respect to the rest of the levels, even if some of them operate with different power-currents depending on the application in question (and, therefore, on the type of multilevel regulator that can be connected to the output of the voltage generation system). Furthermore, the equal distribution of the voltages in all the capacitors at the input of the multilevel regulator is ensured even when there are differences in the parameter values of each series resonant block due to tolerances in its manufacture or deviations in its assembly or to the parasitic elements thereof. In other words, as long as there is DCM in all the series resonant blocks, the equal distribution of voltage is guaranteed. If this is ensured taking into account that there may be tolerances in the series resonant capacitor and in the series resonant inductance (which may be the leakage inductance of the transformer), even if the values of said capacitor and inductance vary throughout the useful life due to ageing, temperature, etc., it will continue in DCM and the balance of voltages will be ensured.

The proposed system provides an equal distribution of N voltages from a single DC voltage source (in general, from a single DC voltage input bus), unlike passive hardware techniques with a low-frequency transformer from the AC grid. These N voltages are always inherently balanced by the topology itself. The N voltages are immune to operating power and to manufacturing, assembly and operating tolerances. This is achieved solely by hardware, without the need for control loops or sensing (unlike active hardware and control balancing techniques), and it is not dependent on operating conditions (delivered power). The hardware that must be designed to achieve operation in discontinuous conduction mode (DCM) is the leakage inductance of the transformer and/or the capacity of the resonant capacitor. The main consequence of DCM operation is that a power-invariant voltage gain is achieved. Therefore, a robust and low complexity topology is proposed, both due to the absence of sensing and due to immunity with regard to tolerances and parasites (unlike the techniques based on passive hardware with natural balancing and passive hardware with a low-frequency transformer from the AC grid).

In the context of the present invention, it should be understood that the N voltages delivered by the voltage generation system (one voltage for each resonant block) are "inherently balanced" or "self-balancing" voltages when, regardless of whether the resonant blocks are affected by different unbalance factors, non-idealities, tolerances, transients or uneven power demand, these blocks provide a constant output voltage that is proportional to the input voltage (that of the common direct current (DC) bus) at all times.

When a multilevel regulating converter is connected to the output of the voltage generator, multiple voltage levels can be obtained at the output of said regulator. Typically, a voltage level can be selected from among at least N+1 possible voltage values from a single DC bus input, considering a voltage generator with N resonant blocks. The at least N+1 output voltages provided can be used for any possible application that requires several different voltage levels.

In a first aspect of the invention, a voltage generation system is provided, comprising: an input bus providing a direct current input voltage; an inverter configured to deliver a square voltage at its output; N resonant power blocks, where N>1, each connected at its respective input in parallel at the output of the inverter, wherein each resonant power block comprises a series resonant capacitor, a single-phase transformer, a rectifier, an output capacitor and a direct current bus connected to the output of a respective rectifier, each resonant power block being configured to operate in discontinuous conduction mode with a constant voltage gain independent of the operating power; wherein the inverter is configured to switch to a frequency less than or equal to the resonance frequency of the resonant power blocks and to operate in discontinuous conduction mode (DCM); each resonant power block being configured to deliver a rectified voltage to each respective direct current bus, each rectified voltage being constant and proportional to the direct current voltage of the input bus; the voltage generation system offering a rectified voltage level for each resonant power block.

The voltage generation system generates self-balancing voltages, in other words, it generates constant voltages that are proportional to the input voltage (i.e., self-balancing or inherently balanced), regardless of the operating conditions, in other words, regardless of the power at which they operate, of the manufacturing, assembly or other tolerances, or of different imbalance factors between its different resonant blocks. As a result, the voltages generated by the system are always balanced.

In embodiments of the invention, at least one of the resonant power blocks is different from the others and has a different rated power from the rest.

In embodiments of the invention, the resonant power blocks are all equal to each other.

In embodiments of the invention, the single-phase transformer of at least one of the resonant power blocks has a different transformation ratio than the transformation ratio of the single-phase transformer of the rest of the resonant power blocks.

In embodiments of the invention, the inverter is configured as an H-bridge formed by two branches, a first branch formed by two diodes in antiparallel with their respective switches and a second branch formed by two diodes in anti-parallel with their two respective switches.

In embodiments of the invention, the inverter is operated with a branch duty cycle of approximately 50%.

In embodiments of the invention, the input bus is connected to a power source or to a power storage system, either directly or indirectly, for example through contactors or through a power electronics converter.

In embodiments of the invention, the output of each resonant power block of the plurality of resonant power blocks is connected in series with the output of another resonant power block of the plurality of resonant power blocks.

In embodiments of the invention, the output of at least one resonant power block of the plurality of resonant power blocks is independent of the outputs of the rest of the resonant power blocks.

In a second aspect of the invention, a power conversion system is provided, comprising: a voltage generation system according to the first aspect of the invention; and a regulating converter having a plurality of inputs and providing an output voltage at its output, the direct current bus of each resonant power block of the voltage generation system being connected to an input of the regulating converter. In implementations of the invention, the regulating converter has as many inputs (N) as resonant power blocks in the voltage generation system.

In embodiments of the invention, the voltage generation system is a voltage generation system in which the output of each resonant power block of the plurality of resonant power blocks is connected in series to the output of another resonant power block of the plurality of resonant power blocks, and the regulating converter has N inputs (as many as there are output buses of the voltage generation system), the output voltage of the regulating converter provides a voltage level that can be selected from among at least N+1 different voltage levels from N different voltage levels provided by the voltage generation system, each of the N voltage levels provided by the voltage generation system being a respective input of the N inputs of the regulating converter.

In embodiments of the invention, pairs of resonant power blocks have their respective outputs connected in series, and a regulating converter that provides an output voltage at its output is connected to each pair of output buses of each respective pair of resonant power blocks, the regulating converters being connected in series to each other.

In a third aspect of the invention, a use of the power conversion system of the second aspect of the invention is provided, for recharging an electric vehicle, wherein the regulating converter is a direct current-direct current (DC/DC) converter, in which some recharging poles of the electric vehicle are connected to the output poles of the regulating converter.

In a fourth aspect of the invention, a use of the power conversion system of the second aspect of the invention is provided for a photovoltaic power generation system, wherein the regulating converter is a direct current-direct current (DC/DC) converter or a direct current-alternating current (DC/AC) converter.

Due to the aforementioned generation of N voltages that are inherently balanced and immune to the operating power and manufacturing, assembly and operation tolerances, the proposal addresses the main disadvantage of conventional multilevel converters. This is one of the main advantages of the proposal. Furthermore, the proposal presents a series of additional advantages, which are described in detail below.

The balanced voltage generator can be operated in such a way that it exhibits the following characteristics: current with very low harmonic distortion; ZCS or ZVS (very low switching losses); high efficiency; operation at high switching frequency, which allows the size of each series resonant block to be reduced; and reduction or removal of electromagnetic interference (EMI) in the voltage generator.

Regarding the transformers, in addition to being able to operate at high frequency and achieving designs with low losses, volume and weight, the distribution of power among N transformers (one in each resonant block) implies improved thermal management and favours improvements in efficiency and power density. Furthermore, the leakage inductance of transformers can be used as series resonant inductance. The inductance of each transformer resonates with a series resonant capacitor. Thus, adding an external coil in series to achieve the required resonance for DCM and constant voltage gain can be avoided. This entails savings in cost, weight and volume, since an additional magnetic component (the coil) is not required. Furthermore, series resonant capacitors passively prevent the saturation of said transformers due to a possible DC component in their currents, which appears in practical implementations due to non-idealities of the system.

The proposed system allows for the use of switching elements in the rectifiers of the resonant blocks and in the multilevel regulator, if any, which have a lower voltage than the operating voltage of the application, since the total voltage is distributed between N intermediate voltage levels. The consequences are reduced power losses of said switching elements and reduced cost.

The proposed voltage generation system is especially applicable in electrified transport systems (preferably recharging battery electric vehicles and also, for example, railway, marine and air traction, fuel cell vehicle traction and auxiliary vehicle power supply systems), generation systems that use renewable energy sources (especially photovoltaic generation), transport networks and distribution of direct current (DC) electricity, micro-grids, backup systems (for example, UPS), electrochemical storage systems, electrolysers and electricity supply to computer servers.

These and other advantages and features of the invention will become apparent in view of the figures and detailed description of the invention.

**BRIEF DESCRIPTION OF THE DRAWINGS**

In order to complement the description and with the aim of making the features of the invention more readily understandable, in accordance with a practical exemplary embodiment thereof, the description is accompanied by a set of figures as an integral part thereof where the following has been represented in an illustrative and non-limiting manner:

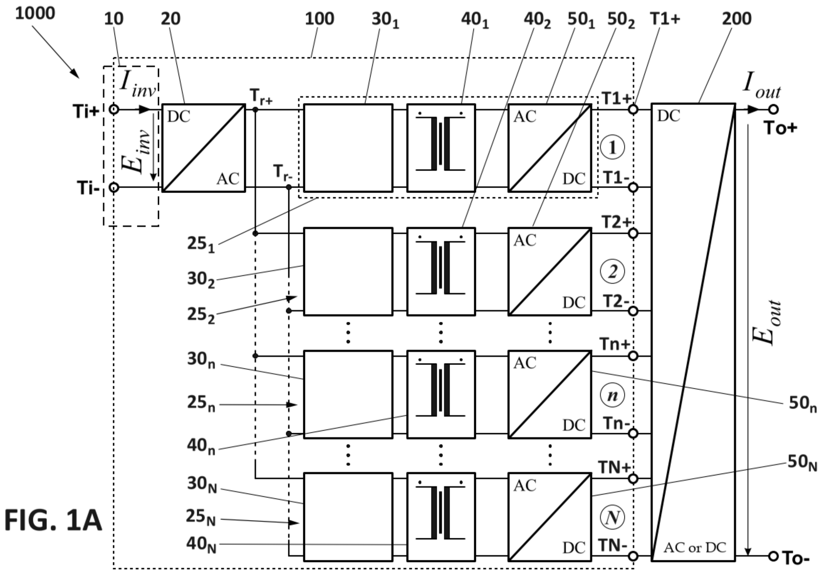

Figure 1A shows a general diagram of a voltage generation system of the invention, considering a general case of N resonant blocks, and a regulating converter that can be connected to the voltage generation system to use its N voltage levels with inherent balancing. The N intermediate voltage levels are, in general, independent of each other.

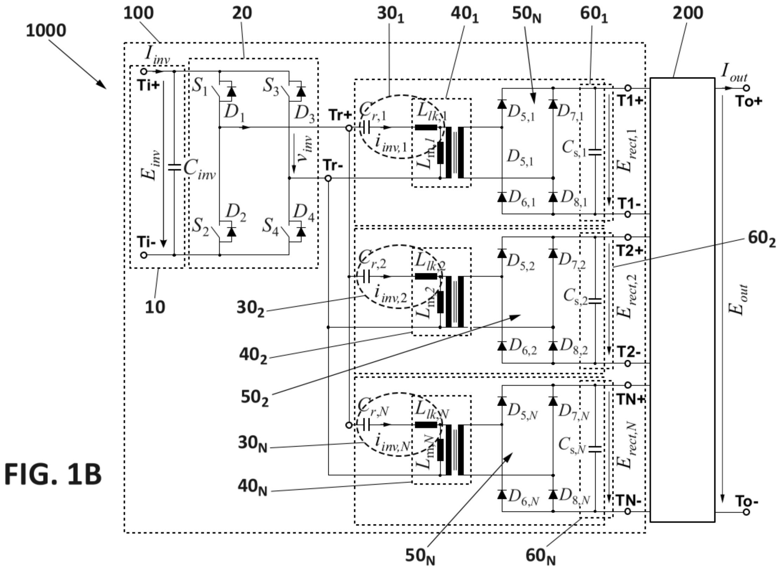

Figure 1B represents a special feature of the diagram of figure 1A, wherein a specific embodiment of the N voltage generation system is shown by way of example.

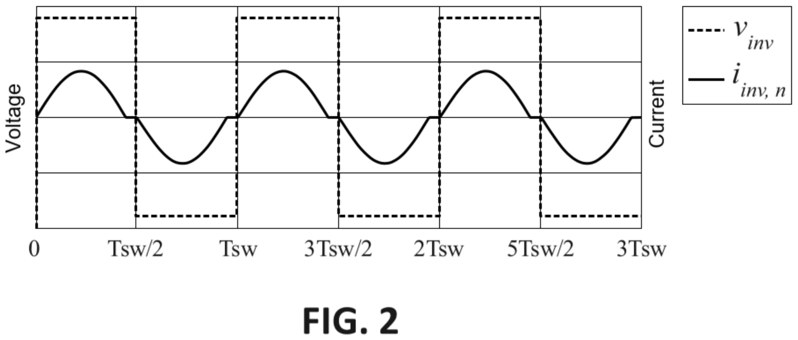

Figure 2 exemplifies some important waveforms of the voltage generation system: the voltage applied by the inverter ($v_{inv}$) at the input of the N resonant blocks, and the current in one of the resonant blocks ($i_{inv,n}$). It is shown that the voltage generation system operates in discontinuous conduction mode or DCM, where n is the number of the resonant block, with n being between 1 and N.

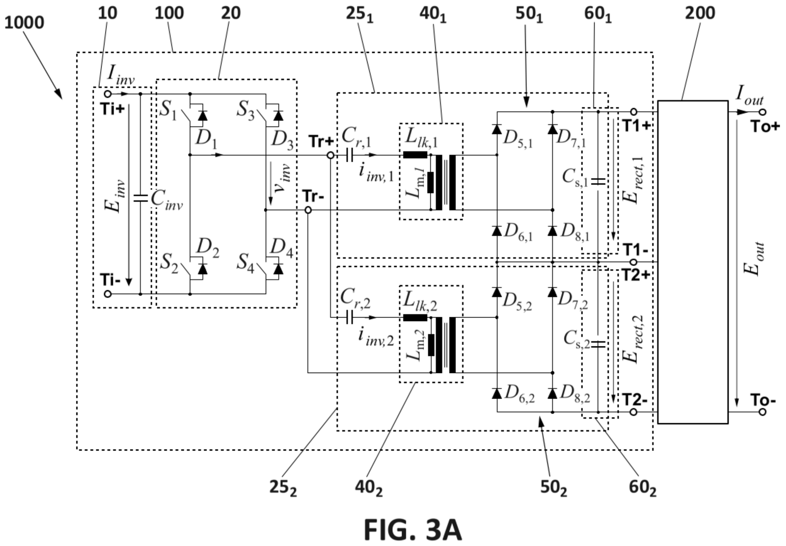

Figure 3A shows a diagram of a voltage generation system of the invention, according to an exemplary implementation in which N = 2 (i.e., two resonant blocks), the outputs of said blocks are connected in series and connected to the output of the voltage generation system is a conventional regulating converter with three voltage levels at the output.

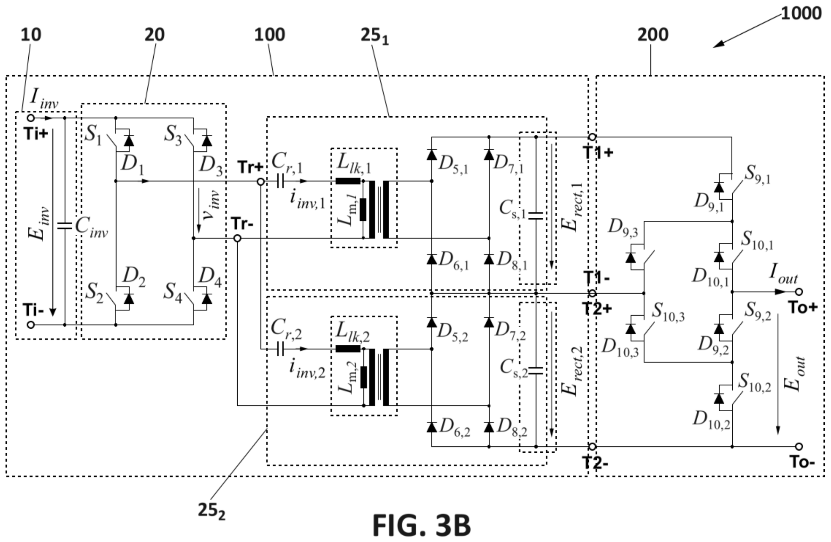

Figure 3B is a particular case of figure 3A, wherein the multilevel regulating converter is a DC/AC multilevel regulating converter and has been implemented by means of a specific circuit by way of example.

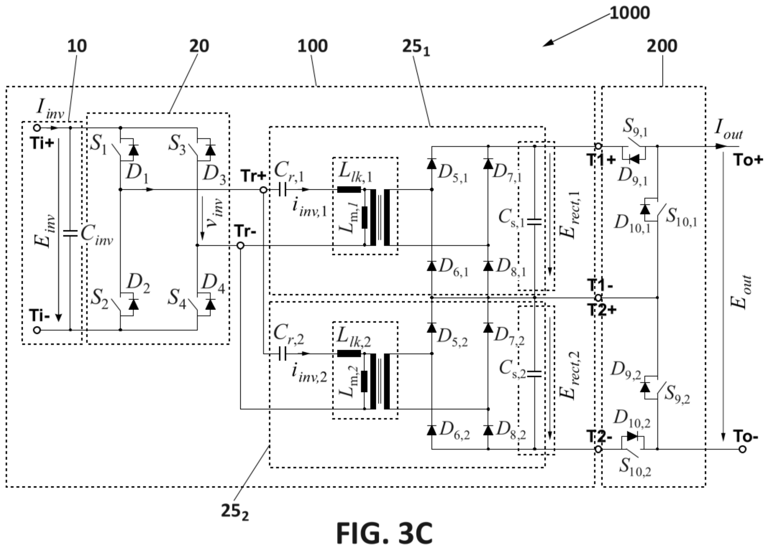

Figure 3C is a particular case of figure 3A, wherein the multilevel regulating converter is a DC/DC multilevel regulating converter and has been implemented by means of another specific circuit by way of example.

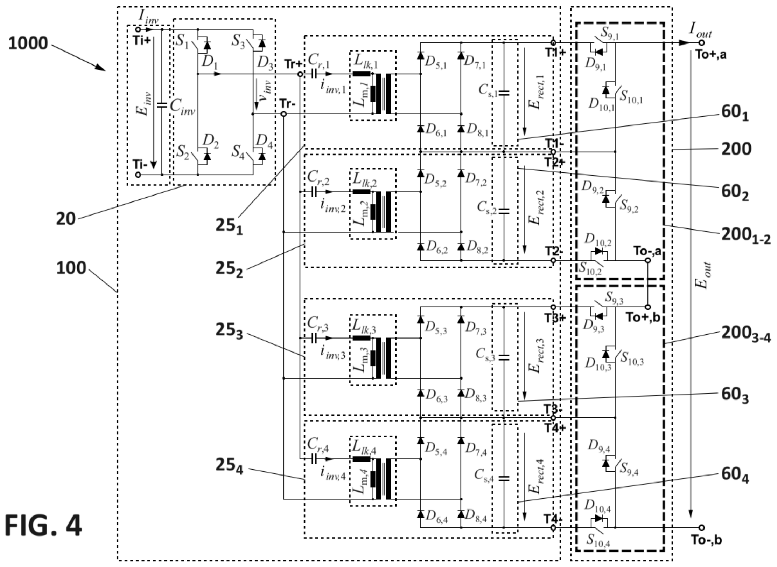

Figure 4 shows a diagram of a voltage generation system according to the invention, according to an exemplary implementation in which N = 4 intermediate or rectified voltages provided by the voltage generator. In this implementation, the multilevel regulator that is connected to the output of the voltage generation system is made up of two circuits that are connected in series to the output, so that together they can provide up to five voltage levels at the output.

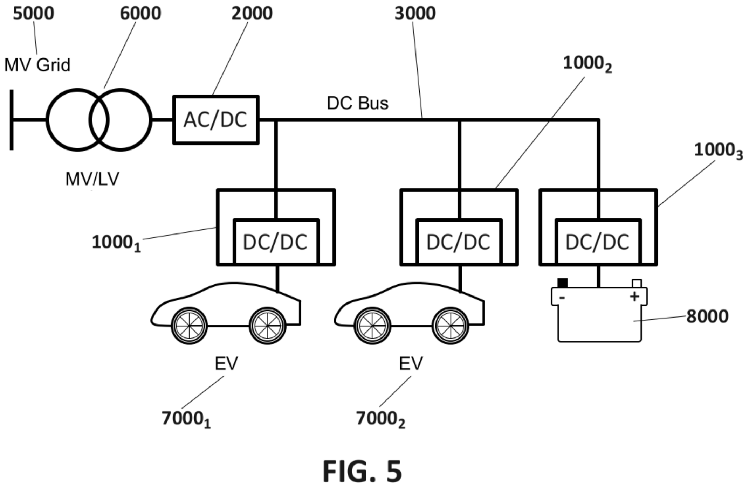

Figure 5 shows an exemplary application of the proposed voltage generation system followed by a DC/DC multilevel regulator, such as the one shown in figure 3C or figure 4, for recharging electric vehicles and/or for a storage system.

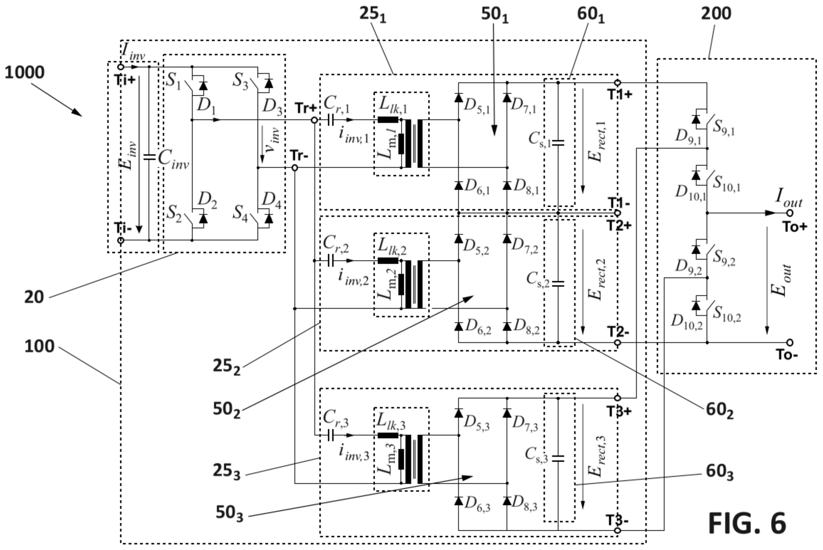

Figure 6 represents an alternative special feature to the diagram of figure 1B. In this example, there are three resonant blocks (N = 3). Two of them have their output connected in series and their voltage is balanced. The other block has its independent output and is connected to the regulator in such a way that it provides a third voltage level that is also always balanced. This exemplary configuration shows a specific regulating converter, with three voltage levels at its output, and that can be used in both direct current (DC) and alternating current (AC) applications.

**DESCRIPTION OF AN EMBODIMENT OF THE INVENTION**

Figure 1A shows a connection diagram of a voltage generation system 100 for voltages that are inherently balanced (i.e., that are self-regulating or self-balancing) and that provides galvanic isolation. Figure 1B shows a connection diagram of the self-balancing voltage generation system according to a possible embodiment of the invention. When a stage of multilevel power conversion or regulation (i.e., a multilevel regulator) 200 is added to the self-balancing voltage generation system 100, a power conversion system 1000 with inherent voltage balancing and galvanic isolation is obtained.

In the diagrams of figures 1A and 1B, the voltage generation system 100 has a direct current or DC input bus 10 with a voltage $E_{inv}$ (terminals $T_{i+}$ and $T_{i-}$,

where $E_{inv} = T_{i+} - T_{i-}$) and a current $I_{inv}$ at the input. A direct current-alternating current converter (DC/AC or inverter) 20 is connected to the output of the input bus 10, said converter providing a square voltage with a constant branch duty cycle of, for example, approximately 50%. It is followed by N number of series resonant blocks $25_1$, ..., $25_n$, ..., $25_N$, with $1<n<N$, which inputs (of the N blocks) are connected in parallel. In each of the series resonant blocks $25_1$, ..., $25_n$, ..., $25_N$, rectification takes place by means of an alternating current-direct current (AC/DC) converter. Rectification can be carried out in several ways, for example, by means of diode bridges or by means of active bridges with MOSFET-type switching elements. Each of the N series resonant blocks $25_1$, ..., $25_n$, ..., $25_N$ is made up of a series resonant capacitor $30_1$, ..., $30_n$, ..., $30_N$ ($C_{r,1}$, $C_{r,2}$, ..., $C_{r,N}$ in figure 1B), a single-phase transformer $40_1$, ..., $40_n$, ..., $40_N$, an AC/DC converter or rectifier $50_1$, ..., $50_n$, ..., $50_N$, and a capacitor at the output $C_{s,1}$, $C_{s,2}$, ..., $C_{s,N}$ (not shown in figure 1A), giving rise to N direct voltage outputs (T1+-T1-, ..., Tn+ - Tn-, ..., TN+ - TN-). The foregoing elements make up the voltage generation system 100, which obtains N DC voltage levels from a single DC voltage ($E_{inv}$). These N voltage levels can be used as input buses of a multilevel regulating converter 200, which can be DC/AC or DC/DC and has the ability to control the voltage and current at its output and, therefore, the power flow of the system.

The input bus 10 is made up of at least one capacitor $C_{inv}$, as shown in figure 1B. The input voltage $E_{inv}$ of the input bus 10 can be obtained, for example, from any point of the power grid (either a DC or AC grid), from an energy source (for example, a renewable generation source, such as photovoltaic solar), or from a storage system (battery, fuel cell or capacitor bank). The input bus 10 can be connected to the aforementioned DC power grid, to the DC power source, or to the storage system, either directly or indirectly, for example, through contactors or through a power electronics converter. In the event that the input bus 10 is connected to the AC power grid (in general, to any alternating power source), it is necessary to do so through a power electronics converter that adapts the alternating current (AC) voltage to the direct current (DC) voltage of the input bus 10.

The input DC voltage provided by the bus 10 does not have to be constant, but can vary as long as the voltage generation system 100 is maintained in discontinuous conduction mode or DCM. Thus, since a constant voltage gain is ensured in the system, the bus voltage provided by the rectifiers $50_1$, $50_2$, ..., $50_n$, $50_N$ ($50_1$, $50_2$, $50_N$ in the more specific example of figure 1B) at its output (intermediate voltage $E_{rect,1}$, $E_{rect,2}$ ... $E_{rect,N}$) can vary directly proportional to that of the input bus 10 ($E_{inv}$). One possible situation of non-constant input bus 10 voltage is a photovoltaic power system, which can provide a voltage range of, for example, between 300 and 500 V. Another possible situation of non-constant input bus 10 voltage can occur if the input voltage to the bus 10 is generated by a battery, which voltage can vary according to its state of charge.

The input bus 10 is connected to an inverter or DC/AC converter 20. In the embodiment shown in figure 1B, the inverter 20 has an H-bridge configuration, formed by two branches. The first branch is formed by the switches $S_1$, $S_2$ and by the diodes $D_1$, $D_2$; and the second branch is formed by the switches $S_3$, $S_4$ and by the diodes $D_3$, $D_4$. In other words, the inverter 20 represented is formed by at least four switching elements $S_1$, $S_2$, $S_3$, $S_4$, which switching on and off can be controlled and which each consist of an anti-parallel diode $D_1$, $D_2$, $D_3$, $D_4$, either as an extrinsic element or as an intrinsic element to the controllable switching element itself. Therefore, each switch of the inverter (represented in figure 1B by way of example, made up of a generic switch S associated with an anti-parallel diode D) can be an insulated-gate bipolar transistor (IGBT) with an anti-parallel diode, or a MOSFET, which by itself allows reverse conduction like a diode (and which, therefore, does not need to specifically implement diodes in the inverter 20). The inverter 20 is preferably operated with a branch duty cycle of approximately 50% (each branch has a cycle of approximately 50%), with a preferred phase shift of approximately 180° between the two branches of the H-bridge and preferentially switching to a frequency less than or equal to the resonance frequency of the subsequent resonant blocks $25_1$, ..., $25_n$, ..., $25_N$ (i.e., resonance frequency between the series resonant capacitor $C_{r,1}$, ..., $C_{r,N}$ and the series resonant inductance $L_{lk,1}$, ... $L_{lk,N}$). Said resonant blocks $30_1$, ..., $30_n$, ..., $30_N$ are made up of, in the embodiment shown in figure 1B, a series resonant capacitor $C_{r,1}$, $C_{r,2}$, $C_{r,N}$ and a series resonant inductance $L_{lk,1}$, $L_{lk,2}$, $L_{lk,N}$, which is preferably the leakage inductance of the transformer, or alternatively a series inductance external to the transformer. Alternatively, the inverter 20 (preferably H-bridge) may switch with a switching frequency greater than the resonance frequency, at limited power as long as the variation in voltage gain due to the power has a negligible effect and can continue, assuming that the voltage gain of the resonant blocks is fixed and, therefore, the balance of voltages is approximately maintained. In general, to operate in discontinuous conduction mode (DCM) the switching frequency must be lower than the resonance frequency between the respective series resonant capacitor and the series resonant inductance, and thus guarantee that the voltage gain in the resonant blocks is constant.

The inverter 20 provides a square voltage $v_{inv} = T_{r+} - T_{r-}$ at its output in such a way that, preferably, it alternatively applies the voltage values $+E_{inv}$ (positive input bus voltage 10) and $-E_{inv}$ (negative input bus voltage 10), if the inverter 20 has an H-bridge configuration as in figure 1B. The voltage $v_{inv}$ is shown in figure 2 for three switching periods of duration $T_{sw}$, for the inverter 20 of figure 1B. The square voltage $v_{inv}$ may have a small zero crossing, as shown in figure 2. The voltage ($v_{inv}$) applied by the inverter 20 to the resonant blocks $25_1$, $25_2$,

$25_N$ is common to all N resonant blocks. A current ($i_{inv,n}$) flows through each of the resonant blocks, the block n in figure 1A being any one between 1 and N.

Alternatively, the inverter 20 can have a configuration other than an H-bridge, that is, it can be any converter, formed by at least one switching element which switching on and off can be controlled. This converter applies a voltage, with or without a mean value, with a duty cycle of approximately 50%. The operation is still correct even if $v_{inv}$ has a non-zero mean value since the series resonant capacitors $C_{r,1}$, $C_{r,2}$, ... $C_{r,N}$ passively prevent saturation of the transformers $40_1$, $40_n$, $40_N$. By way of example, the converter can be implemented as a half-bridge, with a branch similar to the first branch of figure 1B (branch formed by the switches $S_1$, $S_2$ and by the corresponding diodes $D_1$, $D_2$) and, instead of the second branch of the inverter 20 in figure 1B, two preferably identical capacitors, each replacing a switch-diode pair of said branch.

Next, N resonant blocks $25_1$, ..., $25_n$, ..., $25_N$ are connected at the output of the inverter 20 (figures 1A-1B). The N resonant blocks $25_1$, ..., $25_n$, ..., $25_N$ may be the same or different from each other, but they all operate in DCM. The condition to ensure that each resonant block operates in DCM is the following:

$$L_{lk,n} = \frac{f_{sw} E_{inv}^2}{\pi^2 f_{r,n}^2 P_n}, \quad (1)$$

that is, each leakage inductance $L_{lkn}$ (in general, each series resonant inductance) must meet that upper limit, where $f_{sw}$ is the switching frequency of the inverter 20; $E_{inv}$ is the input DC voltage to the inverter 20; $\pi$ is the irrational number (approximately 3.14); $f_{rn}$ is the resonance frequency between $C_{rn}$ and $L_{lkn}$ of the resonant block $25_n$; and $P_n$ is the rated power of the resonant block $25_n$.

Figure 2 shows for clarification purposes the current $i_{inv,n}$ at the input of the resonant block $25_n$, which is a generic resonant block between 1 and N. It can be seen that $i_{inv,n}$ has a certain time of discontinuity. Since the N resonant blocks $25_1$, ..., $25_n$, ..., $25_N$ operate in DCM, so does the inverter 20, since the N currents have discontinuity and, therefore, their sum also has discontinuity, which is the output current of the inverter 20 $i_{inv}$. Given that the entire voltage generation system 100 operates in DCM based on series resonant blocks $25_1$, ..., $25_n$, ..., $25_N$, a constant voltage gain is achieved in each of the N resonant blocks and, therefore, N inherently balanced or self-balancing voltages are achieved for all operating conditions.

As indicated, each resonant block $25_1$, ..., $25_n$, ..., $25_N$ (of which, in general, there are N) is made up of: (1) a series resonant capacitor $C_{r1}$, $C_{r2}$,... $C_{r,N}$; (2) a single-phase transformer $40_1$, ..., $40_n$, ..., $40_N$, which provides galvanic isolation, and which leakage inductance $L_{lk1}$, ..., $L_{lkn}$,...$L_{lk,N}$ can constitute or be used as the series inductance that resonates with the series resonant capacitor, and which magnetising or magnetic inductance $L_{m,1}$, ..., $L_{m,n}$,...$L_{m,N}$ (of each transformer) is used to switch the load of the parasitic capacitances of the switching elements of the inverter 20 and of the N rectifiers $50_1$, ..., $50_n$, ..., $50_N$, achieving that the power losses in the switching are negligible; (3) a rectifier bridge $50_1$, ..., $50_n$, ..., $50_N$, preferably diodes; and (4) an output bus $60_1$, ..., $60_n$, ..., $60_N$ that provides a rectified voltage (direct or DC) $E_{rect,1}$, ..., $E_{rect,n}$,... $E_{rect,N}$ (in general, a current bus between the terminals $T_{n+}$ and $T_{n-}$). Each output bus $60_1$, ..., $60_n$, ..., $60_N$ is made up of at least one capacitor $C_{s1}$, $C_{s2}$, ...$C_{sN}$. The, in general, N direct current buses $60_1$, ..., $60_n$, ..., $60_N$ are generally independent (not connected to each other), although all of them can be connected in series or in groups, depending on the specific implementation, as shown later herein. At least one of the resonant blocks can be different from the rest, for example, by differing in one or more of the following characteristics: rated power, resonant capacity value $C_r$, resonant inductance $L_{lk}$, or transformation ratio of its transformer. In general, the N series resonant capacitors and the N leakage inductances can be different from each other.

Optionally, one or more of the N resonant blocks may have an inductor connected in series which, together with the leakage inductance of the single-phase transformer, constitutes the series resonant inductance. In other words, there may be a series resonant inductance external to the transformer. The value of this inductance is added to the value of the leakage inductance of the transformer, and this sum inductance is what resonates with the series resonant capacitor. It is also possible that, in one or more resonant blocks, the series resonant capacitance $C_r$ is distributed in two, between the primary (input) of the transformer and the secondary (output) of the transformer, thus obtaining a resonant block CLLC.

In support of the N buses $60_1$, ..., $60_n$, ..., $60_N$, one or more DC or direct current power sources may be provided (for example, renewable generation sources, such as photovoltaic solar or wind sources), or storage systems (batteries, fuel cells or capacitor banks). The corresponding bus can be connected to the aforementioned power source or storage system either directly or indirectly, for example, through contactors or through a power electronics converter (the latter is required if the power source is alternating current or AC at its source, to adapt it to the DC voltage of the bus).

All the N single-phase transformers $40_1$, ..., $40_n$, ..., $40_N$ may have the same transformation ratio, or at least one of them may have a different transformation ratio than the rest. In the latter case, the voltage gain (although constant in all cases) is not the same in all the resonant blocks. This is necessary in certain applications, for example, those in which, at the output of the voltage generation system 100, a multilevel regulator 200 with asymmetric levels is connected, that is, it does not start from N identical levels at its input, but rather there are different voltage values at the input. It is possible for one or more single-phase transformers to have a variable transformation ratio by means of on-load or no-load tap changers. In other words, the gain of the transformers can be modified. For example, with a tap changer it can go from a 1:1 ratio to a 1:1.1 ratio.

It is also possible that in at least one of the N resonant blocks there is no galvanic isolation, meaning that there is no transformer in at least one of those blocks. There will be a transformer in at least one of the resonant blocks if they are connected in series with each other at their output, so that the transformer or transformers block recirculation currents, which are undesired. In that case, the transformerless block or blocks implement a series inductor which constitutes the series resonant inductance. This situation in which one or more resonant blocks do not require galvanic isolation may occur, for example, if the output of said resonant block or blocks is used in another independent regulator, in an application that does not require a transformer. For example, in an application for supplying electricity to multiple computer servers, where there are independent outputs to each server and where it is desirable that the supply voltages be balanced (this would be provided by the voltage generation system 100). In that case, since there is no leakage inductance, there needs to be an external series resonant inductance.

It is also possible that at least one of the N resonant blocks consists of an external inductance connected in parallel in any of the following positions: between the inverter 20 and the resonant capacitor $C_{rn}$ (terminals $T_{r+}$ and $T_{r-}$); between the resonant capacitor $C_{rn}$ and the resonant inductance or single-phase transformer $40_1, ..., 40_n, ..., 40_N$ (if any); between the resonant inductance or the single phase transformer $40_1, ..., 40_n, ..., 40_N$ (if any) and the rectifier $50_1, ..., 50_n, ..., 50_N$. This may be necessary to meet the requirements for switching with negligible losses (ZVS) in the voltage generation system 100. An example of a necessary situation is one in which there is no transformer, since there is no magnetic inductance. If there is a transformer, and a parallel external inductance is used, the equivalent inductance is the parallel of the external inductance that is added and of the magnetic inductance of the transformer itself.

The function of the rectifier $50_1, ..., 50_n, ..., 50_N$ at the output of each resonant block $25_1, ..., 25_n, ..., 25_N$ is to convert the AC voltage of the transformer into DC voltage at its output and to allow operation in DCM of the voltage generation system 100 by interrupting the current during the time of discontinuity (time during which the resonant current is approximately zero, as represented with $i_{inv,n}$ in figure 2). The rectifiers $50_1, ..., 50_n, ..., 50_N$ can be implemented in a variety of ways that typically include a set of diodes. In figure 1B, each of the N rectifiers $50_1, 50_2, 50_N$, is implemented as a full diode bridge formed by two branches, each with two diodes (first branch $D_{5,n}$ $D_{6,n}$ and second branch $D_{7,n}$ $D_{8,n}$, where n is the number of the resonant block, between 1 and N). In general, each rectifier $50_1, ..., 50_n, ..., 50_N$ is made up of switching elements which switching on and/or off can be controlled in some way. For example, the switching on/off of the switching elements can be controlled in anti-parallel with at least one of the diodes of the rectifier, or in replacement of the diodes, if the very controllable switching elements allow for current intensity conduction in the same direction as the diodes. This can be achieved, for example, with a transistor in anti-parallel to the diode (IGBT, for example) or with a transistor that directly replaces the diode if it itself can conduct in both directions (for example, a MOSFET). In other words, one or more of the rectifiers can be two-way rectifiers, and in the case of using MOSFETs, it can perform synchronous rectification. Thus, one or more rectifiers can be hybrid, made up of both diodes and transistors (for example, two by two). The transistors will be off during the time of discontinuity of the current $i_{inv,n}$, with n being able to be from 1 to N.

Alternatively, one or more rectifiers of the N resonant blocks is implemented in a way other than as shown in figure 1B. For example, one or more rectifiers have more or less switches than those included in a bridge formed by two branches.

In figures 1A-1B, the, in general, N resonant blocks $25_1, ..., 25_n, ..., 25_N$ are connected in parallel at their input by the terminals $T_{r+}$ and $T_{r-}$ (terminals of the square voltage $v_{inv}$ delivered by the inverter) and their outputs (terminals $T_{1+}, T_{1-}$ a $T_{N+}, T_{N-}$) are generally considered independent or not connected to each other, being able to connect two or more series resonant blocks to the output according to the specific implementation (for example, $T_{1-}$ with $T_{2+}$, $T_{2-}$ with $T_{3+}$ and, in general, $T_{n-}$ with $T_{(n+1)+}$). A multilevel regulating converter 200 can be connected to the output with N self-balancing voltages of the voltage generation system 100 (buses $60_1, ..., 60_n, ..., 60_N$ of voltages $E_{rect,1}, ..., E_{rect,n}, ... E_{rect,N}$), as shown in figures 1A-1B. The voltage generation system 100 can be used in applications that do not require a stage of power regulation 200, such as electrical power transport and distribution systems in direct current grids, power supply equipment for auxiliary systems, power supply equipment for computer servers.

When a multilevel regulating converter 200 is connected, the assembly is a power conversion system 1000 that includes an N inherently balanced voltage generation system 100; in general, with galvanic isolation; and which makes it possible to preferably obtain N+1 voltage levels (in general, at least N+1 voltage levels) at the output of the regulator 200. If any of the N voltages provided by the system 100 is different from the others, the multilevel regulating converter 200 can give more than N+1 voltage levels at its output. In that case, the regulator 200 is asymmetric, since its input voltages are not all identical. The inputs to the regulating circuit 200 are always inherently balanced (whether all N voltages are equal or not), without the need for express control to achieve such balance or for any passive or active auxiliary circuit. The fact that the N voltages are self-balancing means that the ratio between them, decided in the design of the voltage generation system 100, is always maintained. For example, if N=2 and the two transformers have the same transformation ratio, the voltage gain is the same in all the resonant blocks and $E_{rect,1}$, $E_{rect,2}$ will be equal (and they will always be, because they are self-balancing). If, in another exemplary application, N=2, one transformer has a transformation ratio twice that of the other transformer, so one of $E_{rect,1}$, $E_{rect,2}$ will be twice of the other (and will always be so, because they are inherently balanced). The voltage balance results from the topology and from the operation in discontinuous conduction mode of the N resonant blocks.

The regulator 200 has the ability to control the voltage ($E_{out}$) and the current ($I_{out}$) at its output (terminals $T_{o+}$ and $T_{o-}$) and, therefore, the power flow of the system, and it can be DC/DC or DC/AC depending on the application of the implementation. Some of the applications may include use in recharging electric battery vehicles, in storage systems, in electrolysers, and in electricity generation, such as photovoltaic and wind power. The control of the output voltage and current ($E_{out}$, $I_{out}$) in the regulator 200 is carried out by switching on and off sequences of the switches that make up the regulator 200. In these sequences, a decision is made about which switches are on and which are off, as well as for how long. The switching on and off sequences of the switches of the regulator 200 are outside the scope of the present invention.

The N self-balancing voltage levels in the buses $60_1$, ..., $60_n$, ..., $60_N$ can be provided in series if the N resonant blocks $25_1$, ..., $25_n$, ..., $25_N$ are connected in series at their output. As an example, figure 3A shows an implementation for a voltage generation system 100 with N = 2 (two resonant blocks $25_1$, $25_2$) and with its two outputs connected in series. In other words, the output of the first resonant block $25_1$, which is a bus that delivers a voltage $E_{rect,1} = T_{1+} - T_{1-}$, is connected in series by the terminal $T_{1-} = T_{2+}$ at the output of the second resonant block $25_2$, which is a bus that delivers a voltage $E_{rect,2} = T_{2+} - T_2$. When a regulator 200 is connected to the series output buses $60_1$, $60_2$, said regulator is capable of applying up to N+1 =2+1= 3 voltage levels to its output $E_{out}$ (when the two voltages $E_{rect,1}$ and $E_{rect,2}$ are equal).

Figures 3B and 3C show respective specific embodiments of the system 1000 of figure 3A. Specifically, figures 3B and 3C show respective specific stages of power regulation 200 at the output of the voltage generation system 100. In figure 3B, the multilevel regulating converter 200 is DC/AC and has been implemented, by way of example, by an ANPC (Active Neutral-Point-Clamped)-type circuit. In figure 3C, the multilevel regulating converter 200 is DC/DC and has been implemented, by way of example, by four diodes $D_{9,1}$ $D_{10,1}$ $D_{9,2}$ $D_{10,2}$ and their respective switches $S_{9,1}$ $S_{10,1}$ $S_{9,2}$ $S_{10,2}$.

The voltage generation system 100 of figures 3A-3C is a system with inherent balancing of the output voltages ($E_{rect,1}$, $E_{rect,2}$) and with galvanic isolation thereof. The transformers $40_1$, $40_2$ preferably have approximately the same transformation ratio. In the complete power conversion system 1000, that is, when a stage of power regulation 200 is added, these output voltages $E_{rect,1}$ $E_{rect,2}$ are two intermediate voltage levels, preferably being approximately equal, that may be required in various applications, such as electric power generation with connection to an alternating current system at the output, as shown in figure 3B, in which case the power regulator 200 is preferably a direct current-alternating current (DC/AC) converter, or in electric vehicle recharging, in which case the regulator 200 is a direct current-direct current voltage (DC/DC) converter, as shown in figure 3C.

In figure 3B, the regulator 200 is DC/AC and is made up of the switches $S_{9,1}$, $S_{10,1}$, $S_{9,2}$, $S_{10,2}$, $S_{9,3}$, $S_{10,3}$ and their corresponding diodes $D_{9,1}$, $D_{10,1}$, $D_{9,2}$, $D_{10,2}$, $D_{9,3}$, $D_{10,3}$. The circuit of the regulator 200 is an ANPC (Active Neutral-Point-Clamped) converter in this implementation. Alternatively, the switches $S_{9,3}$, $S_{10,3}$ can be removed (keeping the diodes) to simplify the circuit and reduce the number of elements. This occurs at the expense of reducing the number of degrees of freedom by removing elements which switching on/off can be controlled. In that case, the circuit of the regulator 200 is an NPC (Neutral-Point-Clamped) converter. In figure 3C, the regulator 200 is DC/DC and is made up of the switches $S_{9,1}$, $S_{10,1}$, $S_{9,2}$, $S_{10,2}$, $S_{9,3}$, $S_{10,3}$ and their corresponding diodes $D_{9,1}$, $D_{10,1}$, $D_{9,2}$, $D_{10,2}$, $D_{9,3}$, $D_{10,3}$. Alternatively, the switches $S_{10,1}$, $S_{9,2}$ can be removed (keeping the diodes) to simplify the circuit and reduce the number of elements.

In the regulators 200 of the implementations of figures 3A-3C, the desired value can be applied to the output $E_{out} = T_{o+} - T_{o-}$ by opening or closing each of the switches, which in turn enable the respective diodes or not. The output voltage $E_{out}$ can acquire the following values, taking into account that N=2 in these implementations: $E_{rect,1} + E_{rect,2}$, $E_{rect,1}$ or $E_{rect,2}$ (this voltage level is the same since these two voltages are preferably equal), and zero voltage. Therefore, three voltage levels are preferably obtained at the output. In the particular case of asymmetric levels, that is, where $E_{rect,1}$ is different from $E_{rect,2}$, 4 different levels can be obtained at the output $E_{out}$: $E_{rect,1} + E_{rect,2}$, $E_{rect,1}$, $E_{rect,2}$ or zero voltage.

Both examples in figures 3B and 3C show particular implementations of figure 3A, the voltage generation system 100 being identical in all three, with specific circuits of the regulator 200 in which the midpoint $T_{1-} = T_{2+}$ that forms the two series buses of the voltage generation system 100 can be accessed. In other words, the output pole $T_{o+}$ can be connected to the midpoint through the elements $S_{9,3}$, $D_{9,3}$, $S_{10,3}$ or $D_{10,3}$ (figure 3B), or through $S_{10,1}$ or $D_{10,1}$ (figure 3C), and the output pole $T_{o-}$ can be connected to the midpoint through the elements $S_{9,2}$ or

$D_{9,2}$ (figure 3C). In the implementations of figures 3B-3C, the output voltage $E_{out}$ (between the terminals $T_{o+}$ and $T_{o-}$) preferably has 3 voltage levels. The implementation of figure 3B, which shows a DC/AC regulator 200 to be connected to a single phase (single-phase regulator), can be extended to an application in which the regulator can be connected to three phases (three-phase regulator). In this case, the regulator 200 will be made up of three circuits like the regulator 200 of figure 3B, with the independent output poles $T_{o+}$ and $T_{o-}$. The implementation of figure 3C, with 3 voltage levels at the output, is especially suitable for an electric vehicle battery recharging application.

In general, for the diagram of figure 1A (and, therefore, for the particular implementations shown in the remaining figures), the multilevel regulating converter 200 can be made up of two or more regulating circuits connected in parallel or in series to the output. In the case of parallel connection of the circuits of the regulator 200, said circuits are parallelised after a filter connected in $T_{o+}$ and/or $T_{o-}$, and having at least one component, preferably a coil. This parallelisation makes it possible to distribute the power between the parallel circuits of the regulator, if any. In this case, the parallel circuits of the regulator 200 can operate without interleaving, in other words, they operate synchronously or with a phase shift therebetween (between their corresponding signals for controlling the on/off switching of their switches) of approximately 0°. Alternatively, the parallel circuits of the regulator 200 can operate with interleaving, in other words, with a phase shift therebetween (between their corresponding signals for controlling the on/off switching of their switches) of a value other than 0° (typically, but not limited to, 90° and 180° phase shifts). In this case, the parallel circuits that make up the regulator operate asynchronously. This interleaved operation is generally used to reduce the total current ripple, either at the output of the parallelised converters, or at the midpoint (if any). In the case of series connection, the circuits of the regulator 200 are serialised at the output. The objective of this configuration is to use the same type of circuit in the regulator and to increase the number of levels at the output. Figure 4 is included to represent this serialisation.

Figure 4 shows an extension of the implementation of figure 3C with serialisation of two circuits in the regulator 200. The voltage generation system 100 provides N = 4 balanced and preferably equal voltage levels (resonant blocks with the same voltage gain). In this example, the resonant blocks $25_1$, $25_2$ are in series at the output, and the blocks $25_3$, $25_4$ as well. However, the points $T_{2-}$ and $T_{3+}$ are independent. A circuit is connected to the buses $60_1$, $60_2$ which, from the two voltages $E_{rect,1}$ and $E_{rect,2}$, is capable of providing up to three voltage levels between the terminals $T_{o+,a}$ and $T_{o-,a}$. Equivalently, a circuit is connected to the buses $60_3$, $60_4$, which, from the two voltages $E_{rect,3}$ and $E_{rect,4}$, is capable of providing up to three voltage levels between the terminals $T_{o+,b}$ and $T_{o-,b}$. The terminals $T_{o-,a}$ and $T_{o+,b}$ are connected to the regulator 200, leaving their two circuits in series and achieving the capacity of providing up to five voltage levels in $E_{out}$. In general, the implementation of figure 4 can be generalised to N resonant blocks (with N being an even number) in the voltage generation system 100, and thus N self-balancing voltages. In this case, the resonant blocks are connected to form pairs of resonant blocks. In other words, the resonant blocks $25_1$, $25_2$ form a first pair, the resonant blocks $25_3$, $25_4$ form a second pair, and so on. The circuits of the regulator 200 are connected in series at the output, preferably providing up to N+1 voltage levels at the output ($E_{out}$) between the $T_{o+}$ of the first circuit ($T_{o+,a}$ in figure 4) and the $T_{o-}$ of the last circuit ($T_{o-,b}$ in figure 4). The implementation of figure 4, with N+1 (for example, N=4) voltage levels at the output, is especially suitable for an electric vehicle battery recharging application.

The complete system 1000 of figures 3C and 4 can represent, for example, an electric vehicle charger, wherein the charging poles of the electric vehicle are connected to the output voltage $E_{out}$ of the regulator 200, that is, to the poles $T_{o+}$ and $T_{o-}$ (figure 3C) and to the poles $T_{o+,a}$ and $T_{o-,b}$ (figure 4). The complete system 1000 may also represent a charger for a battery storage system. Both exemplary applications are shown in figure 5. Figure 5 shows a diagram in which the DC/DC converters $1000_1$, $1000_2$, $1000_3$ implement the complete system proposal 1000 (preferably with the implementation of figure 3C or figure 4) for recharging electric vehicles (EV) $7000_1$, $7000_2$ or a storage system 8000. The power comes from a central or common rectifier (AC/DC converter 2000) which provides a direct current or DC bus 3000. The supply to the central rectifier preferably comes from the AC power grid 5000 through a transformer 6000 that adapts the voltage level, preferably from high voltage (HV) or medium voltage (MV) to low voltage (LV).

Other possible applications of the implementations in figures 3C and 4 are in applications for generation using renewable energies, such as photovoltaic generation; traction in electric transport, for example, rail and marine; micro-grids; and electrolysers.

The system 1000 of figure 1B can alternatively be implemented as shown in figure 6 when the multilevel regulator 200 requires at least one independent voltage input, with the others in series. In other words, the voltage generation system 100 must have at least one of the N independent voltage outputs (one of the N output buses $60_3$ being independent). The inherent balance and discontinuous conduction mode characteristics of the N output voltages still hold as in the system of figures 1A-1B. By way of example, figure 6 shows a voltage generation system 100 with three resonant blocks $25_1$, $25_2$, $25_3$, in this case two blocks $25_1$, $25_2$ in series and one independent block $25_3$. More generally, the system 100 may have N resonant blocks, generally of a similar design, connected in parallel at their input by the terminals $T_{r+}$ and $T_{r-}$, and at least one of them can be independent of the rest, at its output, while the rest are connected in series at their output. In the system of figure 6, three intermediate levels (N=3) of balanced voltage $E_{rect,1}$, $E_{rect,2}$, $E_{rect,3}$ are obtained. When the system 100 is implemented followed by a regulator 200, an output $E_{out}$ that can give at least three voltage levels is obtained. Two series resonant blocks $25_1$, $25_2$ at their output (their buses $60_1$, $60_2$ are in series) provide the total intermediate voltage, which is $E_{rect,1} + E_{rect,2}$. The third resonant block $25_3$ provides the voltage $E_{rect,3}$ in a current bus $60_3$ independent of the others, which allows the regulator 200 connected after it to provide more than two voltage levels at its output $T_{o+}$, $T_{o-}$. The three resonant blocks $25_1$, $25_2$, $25_3$ are preferably of the same output voltage and therefore $E_{rect,1} = E_{rect,2} = E_{rect,3}$ approximately and preferably. The system 200, which is specifically represented as a final branch of four diodes $D_{9,1}$ $D_{10,1}$ $D_{9,2}$ $D_{10,2}$ accompanied by their respective activation switches $S_{9,1}$ $S_{10,1}$ $S_{9,2}$ $S_{10,2}$, makes it possible to apply to the output $E_{out}$ the total intermediate voltage ($E_{rect,1} + E_{rect,2}$), the independent voltage $E_{rect,3}$, a combination of voltages, which is $E_{rect,1} + E_{rect,2} - E_{rect,3}$, or zero voltage due to the connections of the rectified current buses with selected points of the diode and switch system. The preferred implementation is that in which the three blocks have transformers with equal voltage gains and, therefore, the regulator 200 provides three voltage levels at the output, since $E_{rect,1} + E_{rect,2} - E_{rect,3} = E_{rect,3}$. If the voltage gain of the independent resonant block is different from the other two (the transformation ratio of its transformer is different), four voltage levels can be obtained at the output of the regulator 200. In other words, different configurations of the voltage generation system 100 and/or of the regulator 200 will allow alternative outputs (in general, more than N output voltages). The three intermediate voltages $E_{rect,1}$, $E_{rect,2}$, $E_{rect,3}$ can be equal to each other, or different from each other, or two are equal and one is different.

In general, the resonant blocks $25_1$, $25_2$, $25_3$ can be all equal to each other, or all different from each other, or some of them equal (for example, the two that are in series $25_1$, $25_2$) and others that are different (for example, the third $25_3$). For example, the power of the third block $25_3$ may be less than or greater than that of the other two. It is also possible that the total intermediate voltage is provided by a single resonant block, unlike, as shown in figure 6, where the total intermediate voltage is provided by the resonant blocks $25_1$, $25_2$ with $E_{rect,1} + E_{rect,2}$. In this case, the resonant block has a transformer with a transformation ratio such that the voltage gain is twice that of one of the resonant blocks $25_1$, $25_2$ of figure 6. Thus, it provides the total intermediate voltage. The resonant block $25_3$ that provides the independent rectified voltage still exists in that case. Although the voltage generation system 100 of a specific regulator 200 has been followed in figure 6, a different regulator 200 can be used, either DC/DC or DC/AC. In this alternate implementation, there is no connection to the midpoint $T_{1-} = T_{2+}$, formed by the resonant blocks $25_1$, $25_2$ connected in

series at their output, and an independent block $25_3$. This implementation can be used in a direct current (DC) or alternating current (AC) application.

In this text, the term "comprising" and its derivations (such as "comprising", etc.) should not be understood as exclusionary, meaning that these terms should not be interpreted as excluding the possibility that what is described and defined may include additional elements, steps, etc.

In the context of the present invention, the term "approximately" and terms of its family (such as "approximate", etc.) should be interpreted as indicating values very close to those accompanying said term. In other words, a deviation from an exact value within reasonable limits should be accepted, because a person skilled in the art will understand that such a deviation from the stated values may be unavoidable due to measurement inaccuracies, etc. The same applies to the terms "some", "about" and "substantially".

The invention is obviously not limited to the specific embodiment(s) described herein, but also encompasses any variation that may be considered by any person skilled in the art (for example, related to the choice of materials, dimensions, components, configuration, etc.) within the general scope of the invention as defined in the claims.

## Claims

1. A voltage generation system (100), comprising:

an input bus (10) providing a direct current input voltage ($E_{inv}$);
an inverter (20) configured to deliver a square voltage ($v_{inv}$) at its output ($T_{r+}$, $T_{r-}$);
N resonant power blocks ($25_1$, ..., $25_n$, ..., $25_N$), where N>1, each connected at its respective input in parallel at the output of the inverter (20), wherein each resonant power block ($25_1$, ..., $25_n$, ..., $25_N$) comprises a series resonant capacitor ($C_{r1}$, $C_{r2}$, ...), a single-phase transformer ($40_1$, ..., $40_n$, ..., $40_N$), a rectifier ($50_1$, ..., $50_n$, ..., $50_N$), an output capacitor ($C_{1s,1}$ ..., $C_{s,n}$, ..., $C_{s,N}$) and a direct current bus ($60_1$, ..., $60_n$, ..., $60_N$) connected to the output ($T_{1+}$, $T_{1-}$; ...; $T_{n+}$, $T_{n-}$;...; $T_{N+}$, $T_{N-}$) of a respective rectifier ($50_1$, ..., $50_n$, ..., $50_N$), each resonant power block ($25_1$, ..., $25_n$, ..., $25_N$) being configured to operate in discontinuous conduction mode with a constant voltage gain independent of the operating power;
wherein the inverter (20) is configured to switch at a frequency less than or equal to the resonance frequency of the resonant power blocks ($25_1$, ..., $25_n$, ..., $25_N$) and to operate in discontinuous conduction mode (DCM);
each resonant power block ($25_1$, ..., $25_n$, ..., $25_N$)

being configured to deliver a rectified voltage ($E_{rect,1}$, $E_{rect,2}$, $E_{rect,N}$) to each respective direct current bus ($60_1$, ..., $60_n$, ..., $60_N$), each rectified voltage ($E_{rect,1}$, ..., $E_{rect,n}$, ..., $E_{rect,N}$) being constant and proportional to the direct current voltage ($E_{inv}$) of the input bus (10), the voltage generation system (100) offering a rectified voltage level ($E_{rect,1}$, ..., $E_{rect,n}$, ..., $E_{rect,N}$) for each resonant power block ($25_1$, ..., $25_n$, ..., $25_N$).

2. The voltage generation system (100) of claim 1, wherein at least one of the resonant power blocks ($25_1$, ..., $25_n$, ..., $25_N$) is different from the others and has a different rated power from the rest.

3. The voltage generation system (100) of claim 1, wherein the resonant power blocks ($25_1$, ..., $25_n$, ..., $25_N$) are all equal to each other.

4. The voltage generation system (100) of any of claims 1 or 2, wherein the single-phase transformer ($40_1$, ..., $40_n$, ..., $40_N$) of at least one of the resonant power blocks ($25_1$, ..., $25_n$, ..., $25_N$) has a different transformation ratio than the transformation ratio of the single-phase transformer of the rest of the resonant power blocks.

5. The voltage generation system (100) of any of claims 1-4, wherein the inverter (20) is configured as an H-bridge formed by two branches, a first branch formed by two diodes ($D_1$, $D_2$) in anti-parallel with their respective switches ($S_1$, $S_2$), and a second branch formed by two diodes ($D_3$, $D_4$) in anti-parallel with their two respective switches ($S_3$, $S_4$).

6. The voltage generation system (100) of any of claims 1-5, wherein the inverter (20) is operated with a branch duty cycle of approximately 50%.

7. The voltage generation system (100) of any of claims 1-6, wherein the input bus (10) is connected to a power source or to a power storage system, either directly or indirectly, for example through contactors or through a power electronics converter.

8. The voltage generation system (100) of any of claims 1-7, wherein the output of each resonant power block of the plurality of resonant power blocks ($25_1$, ..., $25_n$, ..., $25_N$) is connected in series to the output of another resonant power block of the plurality of resonant power blocks ($25_1$, ..., $25_n$, ..., $25_N$).

9. The voltage generation system (100) of any of claims 1-7, wherein the output of at least one resonant power block of the plurality of resonant power blocks ($25_1$, ..., $25_n$, ..., $25_N$) is independent of the outputs of the rest of the resonant power blocks.

10. A power conversion system (1000) comprising:

    a voltage generation system (100) according to any of claims 1-9 and
    a regulating converter (200) having a plurality of inputs and providing an output voltage ($E_{out}$) at its output,
    the direct current bus ($60_1$, ..., $60_n$, ..., $60_N$) of each resonant power block ($25_1$, ..., $25_n$, ..., $25_N$) of the voltage generation system (100) being connected to an input of the regulating converter (200).

11. The power conversion system (1000) of claim 10, wherein the voltage generation system (100) is a voltage generation system (100) according to claim 8,

    wherein the regulating converter (200) has N inputs, and
    wherein the output voltage ($E_{out}$) of the regulating converter (200) provides a voltage level that can be selected from among at least N+1 different voltage levels from N different voltage levels provided by the voltage generation system (100), each of the N voltage levels being a respective input of the N inputs of the regulating converter (200).

12. The power conversion system (1000) of claim 10, wherein the voltage generation system (100) is a voltage generation system (100) according to any of claims 1-7,

    wherein pairs of resonant power blocks ($25_1$, ..., $25_n$, ..., $25_N$) have their respective outputs connected in series,
    and wherein each pair of output buses ($60_1$, $60_2$; $60_3$, $60_4$) of each respective pair of resonant power blocks is connected to a regulating converter ($200_{1-2}$, $200_{3-4}$) that provides an output voltage ($T_{o+,a}$ - $T_{o-,a}$; $T_{o+,b}$ - $T_{o-,b}$) at its output, said regulating converters ($200_{1-2}$, $200_{3-4}$) being connected in series with each other at the output.

13. Use of the power conversion system (1000) of any one of claims 10-12, for recharging an electric vehicle, wherein the regulating converter (200) is a direct current-direct current (DC/DC) converter, in which some recharging poles of the electric vehicle are connected to the output poles ($T_{o+}$ $T_{o-}$) of the regulating converter (200).

14. Use of the power conversion system (1000) of any one of claims 10-12, for a photovoltaic power generation system, wherein the regulating converter (200) is a direct current-direct current (DC/DC) converter or a direct current-alternating current (DC/AC) converter.

FIG. 1A

**FIG. 1B**

EP 4 742 524 A1

**FIG. 2**

**FIG. 3A**

EP 4 742 524 A1

**FIG. 3B**

FIG. 3C

FIG. 4

**FIG. 5**

EP 4 742 524 A1

EP 4 742 524 A1

FIG. 6

24

## INTERNATIONAL SEARCH REPORT

| International application No |
|---|
| PCT/ES2023/070428 |

**A. CLASSIFICATION OF SUBJECT MATTER**
INV. H02M3/335    H02M7/483    H02M1/00    B60L53/20
ADD.

According to International Patent Classification (IPC) or to both national classification and IPC

**B. FIELDS SEARCHED**

Minimum documentation searched (classification system followed by classification symbols)
H02M  B60L

Documentation searched other than minimum documentation to the extent that such documents are included in the fields searched

Electronic data base consulted during the international search (name of data base and, where practicable, search terms used)

EPO-Internal

**C. DOCUMENTS CONSIDERED TO BE RELEVANT**

| Category* | Citation of document, with indication, where appropriate, of the relevant passages | Relevant to claim No. |
|---|---|---|
| X | JP 2004 080891 A (ORIGIN ELECTRIC) 11 March 2004 (2004-03-11) | 1-9 |
| Y | paragraphs [0008], [0013], [0015], [0016], [0018], [0021], [0024], [0027]; figures 1,4,5 | 10-14 |
| X | JP H10 79283 A (PFU LTD) 24 March 1998 (1998-03-24) | 1 |
| A | paragraph [0053]; figure 1D | 2-14 |
| Y | CN 108 282 099 A (UNIV HUBEI TECHNOLOGY) 13 July 2018 (2018-07-13) abstract; figure 2 | 10-12 |
| Y | WO 2018/091065 A1 (ABB SCHWEIZ AG [CH]) 24 May 2018 (2018-05-24) figure 3 | 10-12 |

-/--

| | Further documents are listed in the continuation of Box C. | | See patent family annex. |
|---|---|---|---|

*  Special categories of cited documents :

"A"  document defining the general state of the art which is not considered to be of particular relevance

"E"  earlier application or patent but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance;; the claimed invention cannot be considered novel or cannot be considered to involve an inventive step when the document is taken alone

"Y"  document of particular relevance;; the claimed invention cannot be considered to involve an inventive step when the document is combined with one or more other such documents, such combination being obvious to a person skilled in the art

"&"  document member of the same patent family

| Date of the actual completion of the international search | Date of mailing of the international search report |
|---|---|
| 3 January 2024 | 19/01/2024 |

| Name and mailing address of the ISA/ | Authorized officer |
|---|---|
| European Patent Office, P.B. 5818 Patentlaan 2 NL - 2280 HV Rijswijk Tel. (+31-70) 340-2040, Fax: (+31-70) 340-3016 | Kanelis, Konstantin |

Form PCT/ISA/210 (second sheet) (April 2005)

## INTERNATIONAL SEARCH REPORT

| International application No |
| --- |
| PCT/ES2023/070428 |

**C(Continuation).    DOCUMENTS CONSIDERED TO BE RELEVANT**

| Category* | Citation of document, with indication, where appropriate, of the relevant passages | Relevant to claim No. |
| --- | --- | --- |
| Y | AWAL M A ET AL:  "Medium Voltage Solid State Transformer for Extreme Fast Charging Applications",<br>2023 IEEE APPLIED POWER ELECTRONICS CONFERENCE AND EXPOSITION (APEC), IEEE,<br>19 March 2023 (2023-03-19), pages 1528-1535, XP034350872,<br>DOI: 10.1109/APEC43580.2023.10131285<br>[retrieved on 2023-05-31]<br>abstract; figures 1-3<br>----- | 13,14 |
| Y | WO 2019/242561 A1 (BEIJING HANERGY PV TECH CO LTD [CN]) 26 December 2019 (2019-12-26)<br>abstract; figure 5<br>----- | 13,14 |

Form PCT/ISA/210 (continuation of second sheet) (April 2005)

## INTERNATIONAL SEARCH REPORT
Information on patent family members

| | International application No |
|---|---|
| | **PCT/ES2023/070428** |

| Patent document cited in search report | | Publication date | Patent family member(s) | | Publication date |
|---|---|---|---|---|---|
| JP 2004080891 | A | 11-03-2004 | NONE | | |
| JP H1079283 | A | 24-03-1998 | JP | 3286178 B2 | 27-05-2002 |
| | | | JP | H1079283 A | 24-03-1998 |
| CN 108282099 | A | 13-07-2018 | NONE | | |
| WO 2018091065 | A1 | 24-05-2018 | NONE | | |
| WO 2019242561 | A1 | 26-12-2019 | NONE | | |

Form PCT/ISA/210 (patent family annex) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **L. G. FRANQUELO** ; **J. RODRIGUEZ** ; **J. I. LEON** ; **S. KOURO** ; **R. PORTILLO** ; **M. A. M. PRATS**. The age of multilevel converters arrives. *IEEE Industrial Electronics Magazine*, June 2008, vol. 2 (2), 28-39
- **S. KOURO et al.** Recent Advances and Industrial Applications of Multilevel Converters. *IEEE Transactions on Industrial Electronics*, August 2010, vol. 57 (8), 2553-2580
- **S. ALEPUZ et al.** A Survey on Capacitor Voltage Control in Neutral-Point-Clamped Multilevel Converters. *Electronics*, February 2022, vol. 11 (4), 527
- **K. A. CORZINE** ; **J. YUEN** ; **J. R. BAKER**. Analysis of a four-level DC/DC buck converter. *IEEE Transactions on Industrial Electronics*, August 2002, vol. 49 (4), 746-751
- **NING-YI DAI** ; **MAN-CHUNG WONG** ; **YING-DUO HAN**. Application of a three-level NPC inverter as a three-phase four-wire power quality compensator by generalized 3DSVM. *IEEE Transactions on Power Electronics*, March 2006, vol. 21 (2), 440-449
- **H. DU TOIT MOUTON**. Natural balancing of three-level neutral-point-clamped PWM inverters. *IEEE Transactions on Industrial Electronics*, October 2002, vol. 49 (5), 1017-1025
- **C. NEWTON** ; **M. SUMNER**. A novel arrangement for balancing the capacitor voltages of a five level diode clamped inverter. *Seventh International Conference on Power Electronics and Variable Speed Drives*, 1998, 465-470
- **S. BUSQUETS-MONGE** ; **J. D. ORTEGA** ; **J. BORDONAU** ; **J. A. BERISTAIN** ; **J. ROCABERT**. Closed-Loop Control of a Three-Phase Neutral-Point-Clamped Inverter Using an Optimized Virtual-Vector-Based Pulsewidth Modulation. *IEEE Transactions on Industrial Electronics*, May 2008, vol. 55 (5), 2061-2071
- **B. P. MCGRATH** ; **D. G. HOLMES**. Analytical Modelling of Voltage Balance Dynamics for a Flying Capacitor Multilevel Converter. *IEEE Transactions on Power Electronics*, March 2008, vol. 23 (2), 543-550
- **Z. YAO** ; **S. LU**. Voltage Self-Balance Mechanism Based on Zero-Voltage Switching for Three-Level DC-DC Converter. *IEEE Transactions on Power Electronics*, October 2020, vol. 35 (10), 10078-10087